# EUROPEAN PATENT SPECIFICATION

(11) **EP 3 390 816 B1**
(45) Date of publication and mention of the grant of the patent: **15.07.2020**
(21) Application number: 16828761.3
(22) Date of filing: 14.12.2016
(51) Int. Cl.: F03D 7/02, F03D 17/00

(54) **TURBINE ARRANGEMENT**
TURBINENANORDNUNG
AGENCEMENT DE TURBINE

(30) Priority: 16.12.2015 GB 201522194
(43) Date of publication of application: 24.10.2018
(73) Proprietor: Zephir Limited, Daltry, Castle Douglas DG7 3XS (GB)
(72) Inventor: SLINGER, Christopher, Ledbury Hereford and Worcester HR8 1EU (GB); MEDLEY, John, Ledbury Hereford and Worcester HR8 1EU (GB)
(74) Representative: Bailey, Richard Alan
(86) International application number: PCT/GB2016/053935
(87) International publication number: WO 2017/103585

(56) References cited:
- WO-A1-2014/114474
- WO-A2-2011/048024
- US-A1- 2013 003 071

## Description

This invention relates to a turbine arrangement, and in particular to a wind turbine that is provided with a wind speed and direction detection arrangement operable, in use, to provide an indication of the wind speed and wind direction to which the blades of the turbine are to be exposed. Detection of anticipated or expected wind speeds and the wind direction is advantageous in that it allows the wind turbine to be controlled in such a manner as to reduce the risk of damage thereto and/or to optimise the operation thereof.

One form of wind speed and wind direction detection arrangement in common use takes the form of a Lidar-based system in which a laser beam scans a detection area or zone in the form of the periphery of a disc spaced ahead of the turbine, and light scattered from, for example, dust or pollen particles, water droplets or the like carried by the wind is monitored to provide an indication of the windspeed over the detection area.

It is important, in an arrangement of this type, for the wind speed and wind direction detection arrangement to be accurately aligned with the turbine in order to ensure that the measured wind speed and direction information relates to the wind speed and direction to which the turbine is to be exposed. By way of example, if, in plan view, the axis of rotation of the turbine is not parallel to the optical axis associated with the wind speed and direction detection arrangement, there will be an offset between the location of the detection area (and hence the location to which the detected wind speed and direction information relates) and the location of the turbine. Clearly, unless this offset can be taken into account, there is a risk that the detected wind speed and direction information may not have the desired effects in correctly characterising the performance of the turbine.

Typically, a wind speed and direction detection arrangement of the type outlined hereinbefore includes a visible laser output that is used during installation and maintenance procedures to ensure that a line extending between the wind speed and direction detection arrangement and the centre of the detection area (along which the visible laser output is transmitted) extends parallel to the axis of rotation of the turbine. Whilst the use of this technique may aid correct installation of the windspeed detection arrangement, it still requires considerable care to be taken during installation to ensure correct alignment, and does not take into account that the visible alignment laser may be incorrectly aligned, and requires the direction of the turbines axis of rotation to be accurately known. Furthermore, it does not allow for correction of errors resulting from subsequently occurring misalignments, for example arising from vibration or shocks occurring during subsequent stages of the installation process or that may occur during use.

WO2011/048024 and WO2014/114474 describe arrangements in which turbine blade positions can be monitored. US 2013/0003071 A1 discloses a system for providing information about wind speed, wind direction, and properties of a wind turbine blade.

It is an object of the invention to provide a turbine arrangement in which at least some of the disadvantages associated with known turbine arrangements are overcome or are of reduced effect.

According to the present invention there is provided a turbine arrangement as defined by appended Claim 1.

It will be appreciated that by using the same laser device in both monitoring wind speed and direction and yaw misalignment, not only are costs saved through not needing to provide an additional laser device, but also the risk of misalignment between windspeed and yaw misalignment detection laser devices is removed.

The yaw misalignment correction factor is conveniently derived by isolating readings resulting from reflections from the turbine blades, and using direction values associated with those readings to identify the direction of blade movement relative to the laser device. If it is determined that the blade movement lies in a plane other than perpendicular to the sensor axis then this provides an indication that there is an angular yaw misalignment.

In use, the correction factor may be employed in applying an offset to measured windspeed information to correct for the yaw misalignment. Alternatively, or additionally, it may be used during servicing to adjust the turbine arrangement to reduce the degree of yaw misalignment.

The correction factor may be determined using real time data and used substantially in real time. Alternatively, the correction factor may be determined periodically, for example using stored data relating to light reflected from the turbine blades. It will be appreciated that by correcting for yaw misalignment using the correction factor, the wind speed and direction data derived using the detection apparatus may better characterise the wind speed and direction to which the turbine is exposed.

The invention also relates to a method as defined by appended Claim 7.

The invention will further be described, by way of example, with reference to the accompanying drawings, in which:
Figure 1 is a diagrammatic side view of a turbine arrangement in accordance with one embodiment of the invention;
Figure 2 is a diagrammatic plan view illustrating the arrangement of Figure 1; and
Figure 3 illustrates an output derived in accordance with an embodiment.

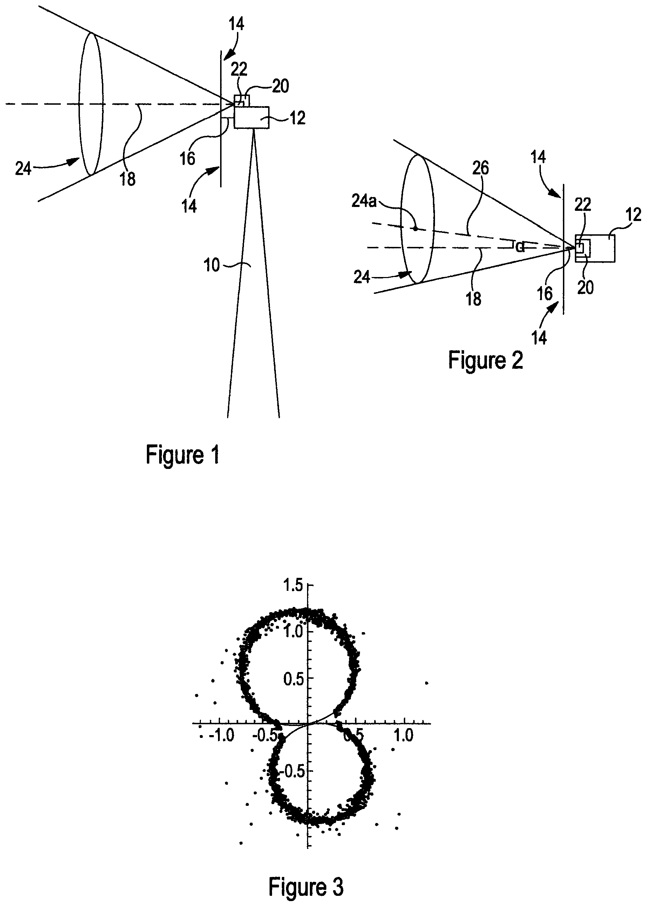

Referring firstly to Figures 1 and 2, a turbine arrangement in accordance with one embodiment of the invention is illustrated. The turbine arrangement comprises a mast 10 carrying, at its upper end, a nacelle 12. A series of turbine blades 14, typically three blades, but more or fewer may be present without departing from the scope of the invention, are mounted to a rotor shaft 16 supported by the nacelle 12 via suitable bearings. In use, wind incident upon the blades 14 drives the blades 14 and rotor shaft 16 for rotation about a turbine axis 18, and the rotation of the rotor shaft 16 may be used to drive an electrical generator or other device. In order to accommodate variations in wind direction, the nacelle 12 is conveniently mounted upon the mast 10 in such a manner as to allow the turbine to face towards the oncoming wind.

Mounted upon the nacelle 12 is a wind speed and direction detection apparatus 20. The detection apparatus 20 includes a laser device 22 operable to emit a laser beam, the laser beam projecting forward of the turbine. The laser device 22 is operable to vary the direction in which the laser beam is transmitted such that the laser beam scans points in a detection zone 24, specifically points spaced apart around the periphery of a disc spaced ahead of the turbine in the wind direction. The detection apparatus 20 is a Lidar-based system and, as will be familiar to the skilled person, operates by monitoring or detecting light reflected or scattered from particles carried by the wind and located at the detection zone 24, the Doppler shift arising from the reflection of light from particles moving with the wind providing an indication of the windspeed in that part of the detection zone 24 being scanned at any given time. As systems of this type are well known, a further description thereof and of the manner of operation thereof is not included herein, save to say that techniques for deriving wind speed and wind direction from the data produced by such a system are well known.

Ideally, the detection zone 24 will be located immediately ahead of the turbine in the wind direction with the result that, allowing for the time taken for wind gusts or the like to travel from the detection zone 24 to the turbine, the measured windspeed will provide an accurate representation of the windspeed to which the turbine is to be exposed. In practise, the detection zone will often be vertically offset by a small distance as a result of the detection apparatus 20 being mounted upon the upper surface of the nacelle 12 rather than located coaxially with the turbine axis 18. Likewise, offset may occur as a result of the detection apparatus 20 being located to one side of the nacelle roof. Provided these offsets are known, appropriate corrections can be applied to the windspeed measurements derived using the detection apparatus 20. Furthermore, there is a risk that the detection apparatus 20 may be angularly misaligned relative to the turbine axis 18. In the arrangement illustrated in Figure 2, there is an angular yaw misalignment between the turbine axis 18 and a sensor axis 26 that extends between the laser device 22 and a centre point 24a of the detection zone 24, the yaw misalignment being denoted as angle α. In order to minimise such yaw misalignment, it is known to provide a visible alignment laser arranged to transmit a laser beam along the sensor axis 26, and for the installer to ensure that any angular misalignment between the laser beam from the alignment laser and the turbine axis is minimised, as mentioned hereinbefore.

In accordance with the invention, whilst a visible alignment laser may still be present and used to aid installation, if desired, the laser device 22 is arranged such that reflections of the transmitted laser beam from the turbine blades 14 are detected and monitored. The reflections from the turbine blades 14 are relatively easy to discriminate from reflections from wind carried particles at the detection zone 24 as the turbine blades 14 are much closer to the laser device 22 than the detection zone 24, and are highly reflective, and so reflections therefrom are much stronger. The Doppler shift arising from reflections from the turbine blades is also usually much smaller than that from reflections from particles at the detection zone as a result of the turbine being designed to rotate relatively slowly and due to the turbine blades 14 moving in a direction substantially perpendicular to the laser beam emitted by the laser device 22. One or other, or both of these characteristics may be used to identify the reflections from the turbine blades 14.

In use, therefore, the data derived using the detection apparatus 20 is analysed to identify readings which arise from reflections of the laser beam from the turbine blades 14.

Considering the readings that arise from reflections from the turbine blades 14 in isolation, and considering only reflections from the turbine blade 14 at a height above the turbine axis 18, processing of the readings by the detection apparatus 20 will appear to suggest that the apparatus 20 is being exposed to a side or cross wind as the reflections from the moving turbine blades 14 will have similar characteristics to those that would be detected in the event that a side wind was being experienced. The laser device 22 and detection apparatus 20 are arranged to monitor this direction. If the detection apparatus 20 is correctly aligned with the turbine axis 18, and hence the angle α is zero, then the detected side wind direction will be perpendicular to the turbine axis 18 and the sensor axis 26. Any variation in the detected side wind direction from this, when considering only the readings relating to reflections from the turbine blades 14, will provide an indication that there is a yaw misalignment, and the angle between the detected side wind direction and a direction perpendicular to the turbine axis 18 will provide an indication of the magnitude of the yaw misalignment angle α.

Once the angle α has been derived, it can be used to apply a correction to the windspeed calculations derived using the remaining data, ie from reflections other than those from the turbine blades 14, to enhance the accuracy of the data representing the wind speed and direction to which the turbine is to be exposed, correcting for the yaw misalignment.

One method by which the analysis of the reflection data may be undertaken, once the reflection data relating to reflections from the turbine blades 14 has been identified and isolated, involves the use of a vectorial model of the beam scan pattern and the velocity of the blades 14, and least square fitting of the detected reflection data with the model to determine the yaw misalignment angle α. The least squares fit method may be a Levenberg-Marquardt method, but other approaches may be used without departing from the scope of the invention.

Figure 3 illustrates example data relating to reflections from the turbine blades (the data relating to these readings being illustrated as blue dots in Figure 3) to which a model (illustrated by the red line in Figure 3) has been fitted. In this case, the model fitted to the data indicates that there is a yaw misalignment angle in the region of -0.6°.

If desired, the invention may be employed to permit real time, or near real time, correction of wind speed and direction data to correct for angular yaw misalignment. However, in many cases, yaw misalignment will only vary slowly over time. Accordingly, in such situations, derivation of the misalignment angle α may be undertaken periodically, using stored data, and the value α used to apply an appropriate correction to wind speed and direction data until such time as it is desired to recalculate a new angle α to allow for any drift or change in the yaw misalignment.

It will be appreciated that, depending upon the application in which the invention is employed, factors such as variations in the shape and size of the turbine blades 14 along their lengths and variations in the pitches thereof may need to be taken into account, but where the vectorial modelling approach outlined hereinbefore is used, this could be built into the model, if required. Likewise, inclination of the turbine may need to be taken into account.

Reference is made hereinbefore to the presence of an alignment laser. It will be understood that it may be possible to omit such a laser, if desired, instead using the techniques described hereinbefore to ensure that any angular yaw misalignment is compensated for.

Whilst in the description hereinbefore a single laser device 22 is used to measure wind speed and direction and to detect yaw misalignment, potentially these functions could be undertaken using separate devices. However, this will not normally be the case as such an approach incurs additional cost, arising from the need to provide two laser devices. Furthermore, there is a risk that the two laser devices may be inaccurately aligned with one another, and any such misalignment would itself introduce errors, potentially negating the benefits of the invention.

Whilst the description hereinbefore is of one embodiment of the invention, it will be appreciated that a wide range of modifications and alterations may be made thereto without departing from the scope of the invention as defined by the appended claims.

## Claims

1. A turbine arrangement comprising a turbine including a plurality of turbine blades (14) rotatable about a turbine axis (18), and a wind speed and direction detection apparatus (20), wherein the wind speed and direction detection apparatus (20) comprises a laser device (22) operable to output a laser beam from a location on a nacelle (12) behind the turbine blades (14) towards a detection zone (24) located ahead of the turbine blades (14), and to monitor light reflected or scattered at the detection zone (24) to provide wind speed and direction information indicative of the wind speed and direction at the detection zone (24), the detection zone (24) comprising an annulus centred on a point lying upon a sensor axis (26) which extends from the laser device (22), wherein the laser device (22) is sensitive to laser light reflected from the turbine blades (14), **characterised in that** the laser device (22) is operable to use information relating to the light reflected from the turbine blades (14) to determine a correction factor indicative of a yaw angular misalignment between the turbine axis (18) and the sensor axis (26).

2. An arrangement according to Claim 1, wherein the yaw misalignment correction factor is derived by isolating readings resulting from reflections from the turbine blades (14), and using direction values associated with those readings to identify the direction of blade movement relative to the laser device (22).

3. An arrangement according to Claim 2, wherein the yaw misalignment correction factor is derived using a vectorial model of beam scan pattern and turbine blade movement.

4. An arrangement according to any of the preceding claims, wherein the correction factor is employed in applying an offset to measured wind speed and direction information to correct for the yaw misalignment.

5. An arrangement according to Claim 4, wherein the correction factor is determined using real time data and used substantially in real time in the control of the turbine.

6. An arrangement according to Claim 4, wherein the correction factor is determined periodically using stored data relating to light reflected from the turbine blades (14).

7. A method comprising using a laser device (22) located behind a plurality of turbine blades (14) of a turbine relative to a wind direction to output a output a laser beam from a location on a nacelle (12) behind the turbine blades (14) towards a detection zone (24) located ahead of the turbine blades (14), the turbine blades (14) being rotatable about a turbine axis (18), the laser device (22) being operable to monitor light reflected or scattered at the detection zone (24) to provide wind speed and direction information indicative of the wind speed and direction at the detection zone (24), the detection zone (24) comprising an annulus centred on a point lying upon a sensor axis (26) which extends from the laser device (22), wherein the laser device (22) is operable to use information relating to the light reflected from the turbine blades (14) to determine a correction factor indicative of a yaw misalignment between the turbine axis (18) and the sensor axis (26).

8. A method according to Claim 7, wherein the yaw misalignment correction factor is derived by isolating readings resulting from reflections from the turbine blades (14), and using direction values associated with those readings to identify the direction of blade movement relative to the laser device (22).

9. A method according to Claim 8, wherein the yaw misalignment correction factor is derived using a vectorial model of beam scan pattern and turbine blade movement.

10. A method according to any of Claims 7 to 9, wherein the correction factor is employed in applying an offset to measured wind speed and direction information to correct for the yaw misalignment.

11. A method according to Claim 10, wherein the correction factor is determined using real time data and used substantially in real time in the control of the turbine.

12. A method according to Claim 10, wherein the correction factor is determined periodically using stored data relating to light reflected from the turbine blades (14).

## Patentansprüche

1. Turbinenanordnung, umfassend eine Turbine, die eine Vielzahl von Turbinenschaufeln (14) einschließt, die um eine Turbinenachse (18) drehbar sind, und eine Vorrichtung (20) zur Detektierung von Windgeschwindigkeit und Windrichtung, wobei die Vorrichtung (20) zur Detektierung von Windgeschwindigkeit und Windrichtung umfasst:
eine Laservorrichtung (22), die imstande ist, einen Laserstrahl aus einer Position auf einer Gondel (12) hinter den Turbinenschaufeln (14) in Richtung einer Detektierungszone (24) auszugeben, die sich vor den Turbinenschaufeln (14) befindet, und um Licht zu überwachen, das an der Detektierungszone (24) reflektiert oder gestreut wurde, um Windgeschwindigkeits- und - richtungsinformationen bereitzustellen, die die Windgeschwindigkeit und Windrichtung an der Detektierungszone (24) angeben, wobei die Detektierungszone (24) einen Kranz umfasst, der auf einem Punkt zentriert ist, welcher auf einer Sensorachse (26) liegt, die sich von der Laservorrichtung (22) erstreckt, wobei die Laservorrichtung (22) auf Laserlicht reagiert, das von den Turbinenschaufeln (14) reflektiert wird, **dadurch gekennzeichnet, dass** die Laservorrichtung (22) imstande ist, Informationen, die von den Turbinenschaufeln (14) reflektiertes Licht betreffen, zur Ermittlung eines Korrekturfaktors zu verwenden, der eine Gierwinkelfehlausrichtung zwischen der Turbinenachse (18) und der Sensorachse (26) angibt.

2. Anordnung nach Anspruch 1, wobei der Korrekturfaktor der Gierfehlausrichtung abgeleitet wird, indem Ablesungen, die von Reflexionen von den Turbinenschaufeln (14) resultieren, isoliert werden und Richtungswerte, die mit diesen Ablesungen zusammenhängen, verwendet werden, um die Richtung der Schaufelbewegung relativ zu der Laservorrichtung (22) zu identifizieren.

3. Anordnung nach Anspruch 2, wobei der Korrekturfaktor der Gierfehlausrichtung unter Verwendung eines vektoriellen Modells des Strahlscanmusters und der Turbinenschaufelbewegung abgeleitet wird.

4. Anordnung nach einem der vorhergehenden Ansprüche, wobei der Korrekturfaktor genutzt wird, um einen Versatz auf die gemessenen Windgeschwindigkeits- und -richtungsinformationen anzuwenden, um auf die Gierfehlausrichtung zu korrigieren.

5. Anordnung nach Anspruch 4, wobei der Korrekturfaktor unter Verwendung von Echtzeitdaten ermittelt wird und im Wesentlichen in Echtzeit in der Steuerung der Turbine verwendet wird.

6. Anordnung nach Anspruch 4, wobei der Korrekturfaktor periodisch unter Verwendung von gespeicherten Daten ermittelt wird, die Licht betreffen, das von den Turbinenschaufeln (14) reflektiert wurde.

7. Verfahren, das Verwenden einer Laservorrichtung (22) umfasst, die sich bezogen auf eine Windrichtung hinter einer Vielzahl von Turbinenschaufeln (14) einer Turbine befindet, um eine Ausgabe eines Laserstrahls aus einer Position auf einer Gondel (12) hinter den Turbinenschaufeln (14) in Richtung einer Detektierungszone (24) auszugeben, die sich vor den Turbinenschaufeln (14) befindet, wobei die Turbinenschaufeln (14) um eine Turbinenachse (18) drehbar sind, die Laservorrichtung (22) imstande ist, Licht zu überwachen, das an der Detektierungszone (24) reflektiert oder gestreut wird, um Windgeschwindigkeits- und -richtungsinformationen bereitzustellen, die die Windgeschwindigkeit und Windrichtung an der Detektierungszone (24) angeben, wobei die Detektierungszone (24) einen Kranz umfasst, der auf einem Punkt zentriert ist, der auf einer Sensorachse (26) liegt, die sich von der Laservorrichtung (22) erstreckt, wobei die Laservorrichtung (22) imstande ist, Informationen, die von den Turbinenschaufeln (14) reflektiertes Licht betreffen, zu verwenden, um einen Korrekturfaktor zu ermitteln, der eine Gierfehlausrichtung zwischen der Turbinenachse (18) und der Sensorachse (26) angibt.

8. Verfahren nach Anspruch 7, wobei der Korrekturfaktor der Gierfehlausrichtung abgeleitet wird, indem Ablesungen, die von Reflexionen an den Turbinenschaufeln (14) resultieren, isoliert werden und Richtungswerte, die mit diesen Ablesungen zusammenhängen, verwendet werden, um die Richtung der Schaufelbewegung relativ zu der Laservorrichtung (22) zu identifizieren.

9. Verfahren nach Anspruch 8, wobei der Korrekturfaktor der Gierfehlausrichtung unter Verwendung eines vektoriellen Modells des Strahlscanmusters und der Turbinenschaufelbewegung abgeleitet wird.

10. Verfahren nach einem der Ansprüche 7 bis 9, wobei der Korrekturfaktor genutzt wird, um einen Versatz auf die gemessenen Windgeschwindigkeits- und - richtungsinformationen anzuwenden, um auf die Gierfehlausrichtung zu korrigieren.

11. Verfahren nach Anspruch 10, wobei der Korrekturfaktor unter Verwendung von Echtzeitdaten ermittelt wird und im Wesentlichen in Echtzeit in der Steuerung der Turbine verwendet wird.

12. Verfahren nach Anspruch 10, wobei der Korrekturfaktor periodisch unter Verwendung von gespeicherten Daten ermittelt wird, die Licht betreffen, das von den Turbinenschaufeln (14) reflektiert wurde.

## Revendications

1. Agencement de turbine comprenant une turbine comportant une pluralité d'aubes de turbine (14) pouvant tourner autour d'un axe de turbine (18), et un appareil de détection de la vitesse et de la direction du vent (20), l'appareil de détection de la vitesse et de la direction du vent (20) comprenant un dispositif laser (22) pouvant fonctionner pour émettre un faisceau laser depuis un emplacement sur une nacelle (12) derrière les aubes de turbine (14) vers une zone de détection (24) située devant les aubes de turbine (14), et pour surveiller la lumière réfléchie ou diffusée au niveau de la zone de détection (24) afin de fournir des informations sur la vitesse et la direction du vent, indiquant la vitesse et la direction du vent au niveau de la zone de détection (24), la zone de détection (24) comprenant un anneau centré sur un point situé sur un axe de capteur (26) qui s'étend à partir du dispositif laser (22), le dispositif laser (22) étant sensible à la lumière laser réfléchie par les aubes de turbine (14), **caractérisé en ce que** le dispositif laser (22) peut fonctionner pour utiliser des informations relatives à la lumière réfléchie par les aubes de turbine (14) pour déterminer un facteur de correction indiquant un désalignement angulaire en lacet entre l'axe de turbine (18) et l'axe de capteur (26).

2. Agencement selon la revendication 1, le facteur de correction du désalignement en lacet étant dérivé en isolant les lectures résultant des réflexions des aubes de turbine (14), et en utilisant les valeurs de direction associées à ces lectures pour identifier la direction du mouvement des aubes par rapport au dispositif laser (22).

3. Agencement selon la revendication 2, le facteur de correction du désalignement en lacet étant dérivé en utilisant un modèle vectoriel du motif de balayage du faisceau et du mouvement des aubes de turbine.

4. Agencement selon l'une quelconque des revendications précédentes, le facteur de correction étant utilisé pour appliquer un décalage aux informations de vitesse et de direction du vent mesurées afin de corriger le désalignement en lacet.

5. Agencement selon la revendication 4, le facteur de correction étant déterminé en utilisant des données en temps réel et utilisé essentiellement en temps réel dans la commande de la turbine.

6. Agencement selon la revendication 4, le facteur de correction étant déterminé périodiquement en utilisant des données stockées relatives à la lumière réfléchie par les aubes de turbine (14).

7. Procédé comprenant l'utilisation d'un dispositif laser (22) situé derrière une pluralité d'aubes de turbine (14) d'une turbine par rapport à une direction du vent pour émettre un faisceau laser à partir d'un emplacement sur une nacelle (12) derrière les aubes de turbine (14) vers une zone de détection (24) située devant les aubes de turbine (14), les aubes de turbine (14) pouvant tourner autour d'un axe de turbine (18), le dispositif laser (22) pouvant être utilisé pour surveiller la lumière réfléchie ou diffusée au niveau de la zone de détection (24) afin de fournir des informations sur la vitesse et la direction du vent indiquant la vitesse et la direction du vent au niveau de la zone de détection (24), la zone de détection (24) comprenant un anneau centré sur un point situé sur un axe de capteur (26) qui s'étend à partir du dispositif laser (22), le dispositif laser (22) pouvant fonctionner pour utiliser des informations relatives à la lumière réfléchie par les aubes de turbine (14) pour déterminer un facteur de correction indiquant un désalignement en lacet entre l'axe de turbine (18) et l'axe de capteur (26) .

8. Procédé selon la revendication 7, le facteur de correction du désalignement en lacet étant dérivé en isolant les lectures résultant des réflexions des aubes de turbine (14), et en utilisant les valeurs de direction associées à ces lectures pour identifier la direction du mouvement des aubes par rapport au dispositif laser (22).

9. Procédé selon la revendication 8, le facteur de correction du désalignement en lacet étant dérivé en utilisant un modèle vectoriel du motif de balayage du faisceau et des mouvements des aubes de turbine.

10. Procédé selon l'une quelconque des revendications 7 à 9, le facteur de correction étant utilisé pour appliquer un décalage aux informations mesurées sur la vitesse et la direction du vent afin de corriger le désalignement en lacet.

11. Procédé selon la revendication 10, le facteur de correction étant déterminé en utilisant des données en temps réel, et utilisé essentiellement en temps réel dans la commande de la turbine.

12. Procédé selon la revendication 10, le facteur de correction étant déterminé périodiquement en utilisant des données stockées relatives à la lumière réfléchie par les aubes de turbine (14).
